# EUROPÄISCHE PATENTSCHRIFT

(11) **EP 1 675 894 B1**
(45) Veröffentlichungstag und Bekanntmachung des Hinweises auf die Patenterteilung: **10.01.2007**
(21) Anmeldenummer: 04786966.4
(22) Anmeldetag: 20.09.2004
(51) Int. Cl.: C08J 7/18, C09D 4/00, C08F 222/10, C08F 299/04, C08F 20/38, C08G 63/00

(54) **POLYMERNETZWERKE**
POLYMER NETWORKS
RESEAUX POLYMERES

(30) Priorität: 25.09.2003 DE 10344412
(43) Veröffentlichungstag der Anmeldung: 05.07.2006
(73) Patentinhaber: Röhm GmbH, 64293 Darmstadt (DE)
(72) Erfinder: SIOL, Werner, 64297 Darmstadt (DE)
(86) Internationale Anmeldenummer: PCT/EP2004/010518
(87) Internationale Veröffentlichungsnummer: WO 2005/030846

(56) Entgegenhaltungen:
- US-B2- 6 602 963

## Beschreibung

### Gebiet der Erfindung

Die Erfindung betrifft Polymernetzwerke aufgebaut aus Dimethacrylaten und Mercaptanen als Hauptbestandteil

### Stand der Technik

Dimethacrylate, d.h. Methacrylsäureester zweiwertiger Alkohole wie z.B. Butandioldimethacrylat, werden ganz allgemein zur Vernetzung von Polymeren eingesetzt.

Im Unterschied zu Diacrylaten, die auch in hoher Konzentration zum Einsatz kommen, werden die sterisch anspruchsvolleren Dimethacrylate im allgemeinen nicht in reiner Form eingesetzt. So wird z.B. in DE 36 16 176 bei der Herstellung von Kratzfestschichten auf der Basis mehrwertiger (Meth)acrylate der Anteil der Dimethacrylate auf Anteile < 30 % begrenzt.

Unterschiede zwischen Diacrylaten und Dimethacrylaten bestehen auch hinsichtlich der Wirkung von Kettenüberträgern bei der radikalischen Polymerisation. So zeigen Nie et al., daß bei der Photopolymerisation von Diacrylaten und Dimethacrylaten in Gegenwart von Dodecanthiol als Überträger insbesondere bei den Methacrylaten eine starke Erhöhung der Abbruchsgeschwindigkeit beobachtet wird (Jun Nie et al. "Chain Length Dependent Termination in the Polymerization of Highly Crosslinked Multifunktional (Meth)acrylates", Presented at (197) Cure and Degradation Kinetics of Thermosetting Systems (auch im Internet nachzulesen unter http://www.aiche.org/conferences/techprogram/paperdetail.asp?PaperID=1875&DSN= annual99).

Während die Diacrylate u.a.aufgrund der hohen Polymerisationsgeschwindigkeit (Acrylate polymerisieren etwa 40mal schneller als Methacrylate) breite Anwendung gefunden haben, z.B. bei der Herstellung UV-härtender Lacke, ist die Anwendung von reinen oder hochkonzentrierten Dimethacrylaten eher die Ausnahme. Hier sind beispielhaft die Polyester mit Methacrylatendgruppen gemäß EP 1223182 oder die Dimethacrylate gemäß DE 698 01 554 zu nennen.

Polymernetzwerke auf der Basis von Alkylthiolen mit wenigstens 2 Thiolgruppen werden in DE 42 34 256 beschrieben.

### Aufgabe und Lösung

Nach wie vor besteht Bedarf an Netzwerken auf der Basis von Dimethacrylaten, die die Vorzüge der Polymethacrylate ( z.B. hohe Witterungsbeständigkeit) zum Aufbau von hochwertigen Netzwerken nutzen.

Es wurden nun Polymernetzwerke gefunden, die diesen Anforderungen genügen. Diese Polymernetzwerke enthalten in polymerisierter Form
A) 60- 100 Teile Dimethacrylate der Formel (1)

   (1) CH₂=CCH₃COO-X-O-COCCH₃=CH₂,

   wobei X für einen bifunktionellen Rest aus der Gruppe der gegebenenfalls substituierten Alkane, Ester, Dimethylsiloxane und Polypropylenoxide steht,
B) 40- 0 Teile mit (1) copolymerisierbarer Vinylverbindungen B,
C) 1- 40 Teile Mercaptane RS-H , wobei das molare Verhältnis

Dimethacrylat/ Mercaptan < 10, bevorzugt < 5 ist.

Bevorzugt enthalten diese Polymernetzwerke Dimethacrylat und Mercaptan in einem molaren Verhältnis, das im Bereich 1,5- 4,5 liegt.

Interessante Polymernetzwerke sind so aufgebaut, daß X für einen Alkylidenrest mit 8-300 bevorzugt 10- 40 Kohlenstoffatomen steht. Beispielhaft sind zu nennen Decandioldimethacrylat oder Dodecandioldimethacrylat oder noch längerkettige Alkylidendimethacrylate wie (Poly-(-ethylen-co-1,2 butylen)-diol-)-dimethacrylat mit einem Mₙ von ca. 3000. Besonders interessante Polymernetzwerke werden erhalten, wenn X für einen bifunktionellen Rest mit Estergruppen steht:

X= -(-A-OCO-B-COO-)ₘ-A-, -(-D-COO-)ₙ-A-(-OCOD-)ₙ-,

worin A, B und D unabhängig voneinander für einen Alkyliden- oder Arylidenrest mit 2- 20 Kohlenstoffatomen, m für 1- 100 und n für 1-50 stehen.

Beispielsweise steht A für 1,2-Ethyliden (-CH₂-CH₂-), B für Octamethylen oder 1,4-Phenylen und D für 1,1 Ethyliden oder Phenylen.

So können als Bestandteile des bifunktionellen Restes X genannt werden: Milchsäure (D= 1,1 Ethyliden), Terephthalsäure (B= Phenylen), Ethylenglykol (A= Ethyliden), wobei mit A und B z.B.Terephthalsäure- bis-(2-methacryloyloxyethylester) als Dimethacrylat (1) resultiert.

Derartige Polymernetzwerke aus Estergruppen enthaltenden Dimethacrylaten (1) und

Mercaptanen eignen sich hervorragend zum Aufbau hydrolytisch abbaubarer Gegenstände.

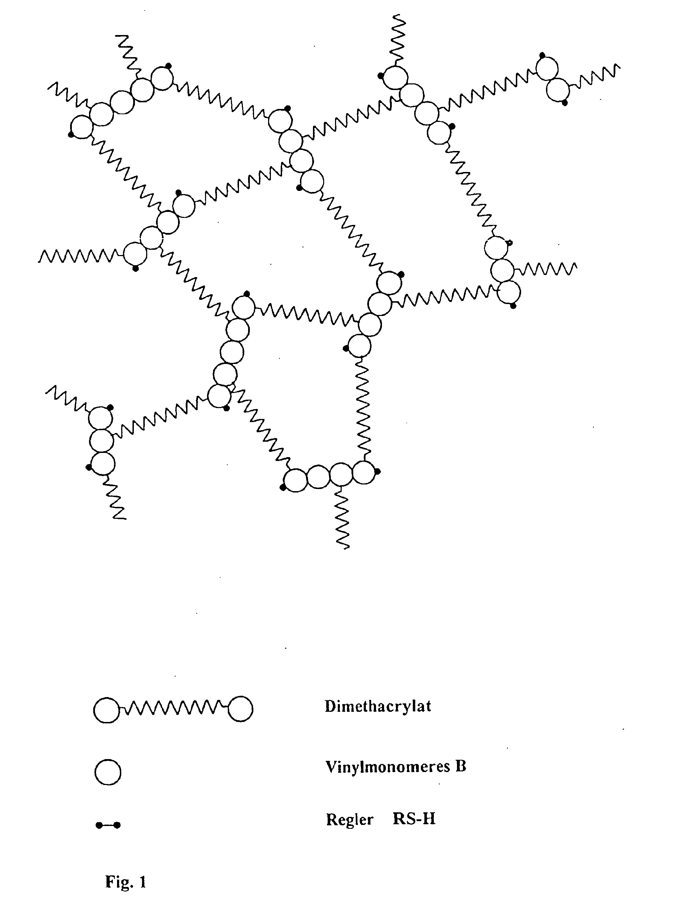

Wie Fig. 1 zeigt, bestehen die erfindungsgemäßen Netzwerke aus sehr kurzkettigen Polymethacrylatblöcken, die nur über die Dimethacrylate (1) vernetzt sind. Eine Hydrolyse der Estergruppen des bifunktionellen Restes X führt damit zum Zerfall des gesamten Netzwerkes. Die Abbaubarkeit der erfindungsgemäßen Netzwerke läßt sich einfach durch die Hydrolyseempfindlichkeit der den bifunktionellen Rest X aufbauenden Estergruppen steuern.

Andererseits veranschaulicht Fig. 1 auch, daß sich bei Einsatz von sehr langkettigen, flexiblen Brücken X sehr weiche Polymernetzwerke herstellen lassen. Hier sind z. B. die Dimethacrylate von Poly-(dimethylsiloxan) mit bis-(hydroxyalkyl)-Endgruppen (z.B. mit Mn ca. 5600), oder die Dimethacrylsäureester von Polyethylenglykol-copropylenglykol mit Mn 2.500 oder 12.000 zu nennen.

Derartige, sehr weiche Netzwerke sind z.B. zum Aufbau von Antidröhnmassen geeignet. Der Einsatz von reinen Polyethylenglykolen als Bestandteil von X ist weniger bevorzugt.

Ein Großteil der erfindungsgemäßen, amorphen Polymernetzwerke zeichnet sich durch eine hohe Lichtdurchlässigkeit und einen geringen Haze aus.

Wie Fig. 1 veranschaulicht, stellen die erfindungsgemäßen Dimethacrylat/Regler-Netzwerke Materialien dar, deren Eigenschaften aufgrund der sehr kurzen Polymethacrylatblöcke insbesondere bei größeren bifunkionellen Resten X durch die Eigenschaften der Gruppen X bestimmt werden. Erfindungsgemäß sind die Polymethacrylatsequenzen sehr kurz, bis hin zu Tetrameren, Trimeren oder Dimeren, so daß sie im Grunde nur eine Verknüpfung der mengenmäßig größeren Anteile der X aufbauenden Bestandteile darstellen.

Dies ermöglicht den Aufbau sehr zäher, lösungsmittelbeständiger Netzwerke. Hier sind Netzwerke mit aromatischen Gruppen zu nennen, insbesondere solchen Gruppen, die zur Kristallisation neigen. Beispielhaft sei hier der oben bereits erwähnte Terephthalsäure- bis-(2-methacryloyloxyethylester) genannt.

Wie aus Fig. 1 gut zu erkennen ist, hat ein geringer Anteil an mit den Dimethacrylaten (1) coplymerisierbaren Vinylmonomeren B keinen störenden Einfluß auf die Eigenschaften des erfindungsgemäßen Netzwerks aus Dimethacrylaten und

Mercaptanen. Im allgemeinen handelt es sich bei B um (Meth)acrylsäure und ihren Derivaten, dabei sind Methacrylsäureester mit 1- 18 C- Atomen im Alkylrest bevorzugt. Diese Vinylmonomeren B dienen z. B. zur besseren Einarbeitung von Initiatoren oder als Haftvermittler oder Cohäsionsverbesserer für die Polymemetzwerke. Besonderes Interessse als Monomere B verdienen auch Monomethacrylsäureester der Diole HO-X-OH also Ester vom Typ CH₂=CCH₃COO-X-OH.

Der Anteil der Monomeren B ist auf < 40 Gewichtsteile oder bevorzugt <20, besonders bevorzugt< 5 Gewichts%. beschränkt.

Wesentlich für die Polymernetzwerke sind die Polymerisationsregler vom Typ der Mercaptane. Hier sind insbesondere Mercaptane mit nur einer SH- Gruppe zu nennen, so z.B. Alkanthiole mit 1- 18 C- Atomen, z.B. Butanthiol, oder ganz allgemein Ester der Thioglykolsäure, Thiomilchsäure oder anderer SH- Gruppen haltiger Carbonsäuren, z.B. 2-Ethylhexyl-thioglykolat.

Über das Verhältnis von Dimethacrylat zu Mercaptan läßt sich die Länge der Methacrylatblöcke recht gut steuern, wobei im bevorzugten Fall jede Polymethacrylatkette eine RS- Startgruppe und eine -H- Endgruppe trägt. Im allgemeinen wird das molare Verhältnis von Dimethacrylat zu Mercaptan < 12, bevorzugt< 10 und besondres bevozugt < 5 betragen.

Bevorzugt bestehen die erfindungsgemäßen Netzwerke vollständig, d.h. zu > 90% bzw.bevorzugt zu>95% aus den Komponenten gemäß A),B) und C).

Besonderes Interesse findet ein Verfahren zur Herstellung der Netzwerke aus Dimethacrylat und Mercaptanen, bei dem Dimethacrylate gemäß Formel (1) und

Mercaptane RS- H im molaren Verhältnis Dimethacrylat/ Mercaptan 1,5/ 1- 10/ 1 unter den Bedingungen der radikalischen Polymerisation polymerisiert werden. Dabei kommen Photoinitiatoren, energiereiche Strahlung oder bevorzugt thermische oder Redoxinitiatoren zum Einsatz. Als Beispiel für thermische Initiatoren seien genannt: Azoverbindungen oder Peroxide, insbesondere Peroxyester, z.B. t-Butylperoxy-2-Ethylhexanoat.

Im allgemeinen kommen die Initiatoren in Anteilen von 0,01- 5 Gew% bezogen auf die Dimethacrylate zum Einsatz. Die Polymerisationstemperatur liegt im allgemeinen im Bereich 0- 100°C.

### Beispiele

Beispiel 1 molares Verhältnis Dimethacrylat/ Mercaptan= 3,9 Eine Lösung von 20mg Azoisobutyronitril (AIBN) in einer Mischung aus 8,56g 1,10 Decandioldimethacrylat (27,6mmol) und 1,45g 2-Ethylhexyl-thioglykolat (7,12mmol) wird in eine Glasform gegeben, bei ca. 20mbar entgast, mit Argon überschichtet und bei 70°C im Wärmeschrank polymerisiert.

Man erhält einen brillanten, glasklaren, fehlerfreien Formkörper von guter Festigkeit. Lichtdurchlässigkeit> 90%, Haze < 10%.

Beispiel 2 molares Verhältnis Dimethacrylat/ Mercaptan= 2,0 Eine Lösung von 32mg AIBN in einer Mischung aus 7,56g 1,10 Decandioldimethacrylat (24,4mmol) und 2,48g 2-Ethylhexyl-thioglykolat (12,2mmol) wird wie in Beispiel 1 polymerisiert.

Man erhält einen brillanten, glasklaren, fehlerfreien Formkörper, der biegbar und deutlich weicher als der Formkörper gemäß Beispiel 1 ist. Lichtdurchlässigkeit> 90%, Haze< 10%.

Vergleichsbeispiel 1 nicht erfindungsgemäß Eine Lösung von 20mg AIBN wird in 9,92g 1,10 Decandioldimethacrylat gelöst und wie in Beispiel 1 polymerisiert.

Man erhält einen harten, in sich gerissenen Formkörper.

## Patentansprüche

1. Polymernetzwerke, enthaltend in polymerisierter Form
A) 60- 100 Teile Dimethacrylate der Formel (1)
(1) CH₂=CCH₃COO-X-O-COCCH₃=CH₂,
wobei X für einen bifunktionellen Rest aus der Gruppe der gegebenenfalls substituierten Alkane, Ester, Dimethylsiloxane und Polypropylenoxide steht,
B) 40- 0 Teile mit (1) copolymerisierbarer Vinylverbindungen B,
C) 1- 40 Teile Mercaptane RS-H
**dadurch gekennzeichnet, daß** das molare Verhältnis
Dimethacrylat/ Mercaptan < 10 ist.

2. Polymernetzwerke gemäß Anspruch 1, **dadurch gekennzeichnet, daß** das molare Verhältnis Dimethacrylat/ Mercaptan im Bereich 1,5- 4,5 liegt.

3. Polymernetzwerke gemäß den Ansprüchen 1 und 2, **dadurch gekennzeichnet, daß** X für einen Alkylidenrest mit 8- 300 Kohlenstoffatomen steht.

4. Polymernetzwerke gemäß den Ansprüchen 1 und 2, **dadurch gekennzeichnet,**
**daß** X= -(-A-OCO-B-COO-)ₘ-A-, -(-D-COO-)ₙ-A-(-OCOD-)ₙ-,
worin A, B und D unabhängig voneinander für einen Alkyliden- oder Arylidenrest mit 2- 20 Kohlenstoffatomen, m für 1- 100 und n für 1-50 stehen.

5. Verwendung der Polymernetzwerke gemäß Anspruch 4 zur Herstellung von hydrolytisch abbaubaren Gegenständen.

6. Verwendung der Polymernetzwerke gemäß den Ansprüchen 1- 4 zur Herstellung von Antidröhnmassen.

7. Verfahren zur Herstellung von Polymernetzwerken gemäß den Ansprüchen 1- 4
**dadurch gekennzeichnet, daß** Dimethacrylate gemäß Formel (1) und Mercaptane RS-H im molaren Verhältnis Dimethacrylat/ Mercaptan 1,5/1-10/1 unter den Bedingungen der radikalischen Polymerisation polymerisiert werden.

## Claims

1. Polymer networks, containing in polymerized form
A) from 60 to 100 parts of dimethacrylates of the formula (1)
(1) CH₂=CCH₃COO-X-O-COCCH₃=CH₂,
where X is a bifunctional radical from the group of the unsubstituted or substituted alkanes, esters, dimethylsiloxanes, and polypropylene oxides,
B) from 40 to 0 parts of vinyl compounds B copolymerizable with (1),
C) from 1 to 40 parts of mercaptans RS-H
**characterized in that** the molar ratio of dimethacrylate to mercaptan is < 10.

2. Polymer networks according to Claim 1,
**characterized in that** the molar ratio of dimethacrylate to mercaptan is in the range from 1.5 to 4.5.

3. Polymer networks according to Claims 1 and 2,
**characterized in that** X is an alkylidene radical having from 8 to 300 carbon atoms.

4. Polymer networks according to Claims 1 and 2,
**characterized in that**
X = - (-A-OCO-B-COO-)ₘ-A-, - (-D-COO-)ₙ-A-(-OCOD-)ₙ-,
in which A, B, and D, independently of one another, are an alkylidene or arylidene radical having from 2 to 20 carbon atoms, m is from 1 to 100, and n is from 1 to 50.

5. Use of the polymer networks according to Claim 4 for production of hydrolytically degradable articles.

6. Use of the polymer networks according to Claims 1 to 4 for production of antidrumming compositions.

7. Process for preparation of polymer networks according to Claims 1 to 4, **characterized in that** dimethacrylates of formula (1) and mercaptans RS-H are polymerized under free-radical polymerization conditions in a molar ratio of dimethacrylate to mercaptan of from 1.5:1 to 10:1.

## Revendications

1. Réseaux polymères comprenant, sous forme polymérisée :
A) de 60 à 100 parties de diméthacrylates de formule (1)
(1) CH₂ = CCH₃COO-X-O-COCCH₃ = CH₂
dans laquelle X représente un radical bi-fonctionnel parmi le groupe constitué d'alcanes éventuellement substitués, d'esters, de diméthylsiloxanes et d'oxydes de polypropylène,
B) de 40 à 0 parties de composés vinyliques B copolymérisables avec (1),
C) de 1 à 40 parties de mercaptans RS-H,
**caractérisés en ce que** le rapport molaire diméthacrylate/mercaptan est < à 10.

2. Réseaux polymères selon la revendication 1,
**caractérisés en ce que** le rapport molaire diméthacrylate/mercaptan est dans la plage de 1,5 à 4,5.

3. Réseaux polymères selon les revendications 1 et 2,
**caractérisés en ce que** X représente un radical alkylidène renfermant de 8 à 300 atomes de carbone.

4. Réseaux polymères selon les revendications 1 et 2,
**caractérisés en ce que** X représente :
un groupe -(-A-OCO-B-COO-)ₘ-A-, ou
un groupe -(-D-COO-)ₙ-A-(-OCOD-)ₙ-,
dans lesquels A, B et D représentent, indépendamment les uns des autres, un radical alkylidène ou un radical arylidène renfermant de 2 à 20 atomes de carbone, m vaut de 1 à 100 et n vaut de 1 à 50.

5. Utilisation des réseaux polymères selon la revendication 4 pour la production d'articles dégradables par voie hydrolytique.

6. Utilisation des réseaux polymères selon les revendications 1 à 4 pour la production de compositions anti-vrombissantes.

7. Procédé de préparation de réseaux polymères selon les revendications 1 à 4, **caractérisé en ce que** des diméthacrylates selon la formule (1) et des mercaptans RS-H sont polymérisés en un rapport molaire diméthacrylate/mercaptan de 1,5/1 à 10/1, dans les conditions de la polymérisation radicalaire.
